# EUROPEAN PATENT APPLICATION

(11) **EP 1 341 128 A1**
(43) Date of publication of application: **03.09.2003**
(21) Application number: 02100204.3
(22) Date of filing: 28.02.2002
(51) Int. Cl.: G06T 11/60

(54) **Method for rendering based on strokes**

(71) Applicant: AGFA-GEVAERT N.V., 2640 Mortsel (BE)
(72) Inventor: DE BIE, Carolus, testraat, 27 B-2640 - Mortsel (BE)

(57) **Abstract**

A method for rendering a flat by a renderer. The method includes dividing the flat into a plurality of strokes; for each specific stroke out of the plurality of strokes: sending the specific stroke to the renderer and rendering the specific stroke in the renderer, thus obtaining a specific rendered stroke corresponding to the specific stroke; appending the specific rendered strokes corresponding to the plurality of strokes, thus obtaining an output result.

## Description

As formats of imaging devices are increasingly getting bigger, and as the performance of a pre-press system is a very important characteristic, new, optimized algorithms are required to maintain acceptable throughputs on standard hardware.

The performance of a renderer (aka RIP, i.e. Raster Image Processor) is nearly proportional to the complexity of a job as long as these jobs can run completely in the available memory, i.e. the available RAM (Random Access Memory). The more complex a job is, the more intermediate information needs to be stored in the renderer, prior to final output. For typical jobs in commercial and packaging workflows the size of the intermediate storage area can be considered as nearly proportional to the size of the output . This means that for increasingly larger formats, the renderer will need more memory in order to guarantee the proportional performance relation. If the renderer can not run from memory anymore, most operating systems will start a mechanism of swapping temporarily non-used memory to disk. This virtual memory mechanism causes increased execution times, that are no longer proportional to the complexity of the job but that are larger.

When using a feature like trapping in the RIP (aka In-Rip-Trapping option = IRT) the effect is intensified as the IRT module in the RIP generates a large amount of additional intermediate data, thereby needing even more memory,

The invention describes an alternative mode of sending the data to the renderer and thereby gaining performance in situations where not enough memory would have been available in prior art implementations.

The renderer can deliver separations in two ways: non-stroked or stroked mode. In non-stroked mode, an entire separation is rendered and written to disk in one go (as in prior art implementations). In stroked mode, the new algorithm in accordance with the invention, the renderer divides the flat, i.e. the imposed page contents, in strokes (preferably parallel to the slow scan direction of the device) and renders those strokes individually. Each stroke typically corresponds with a set of pages as presented in the drawing. The drawing shows an 8 up example where two pages are located in one stroke and these two pages are rendered as one unit. The memory requirements for this rip are comparable to those of a 2UP rip.

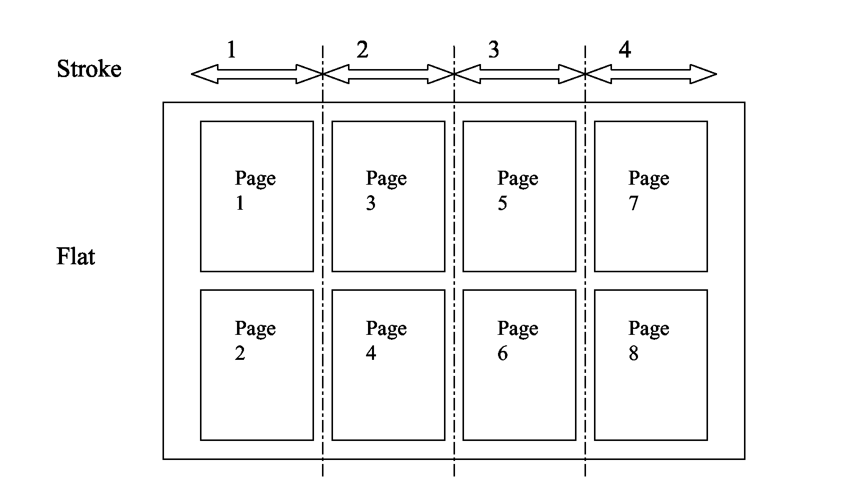

Before sending the output to the imaging device, the rendered strokes are appended to the previous strokes, hence restoring the wanted end-result. The appending preferably happens on the fly, i.e. without using intermediate storage means. An advantage of stroked mode is that the renderer requires less RAM to hold the image. Thus, the renderer can handle larger jobs at high performance.

## Claims

1. A method for rendering a flat by a renderer, the method comprising the steps of:
- dividing said flat into a plurality of strokes;
- for each specific stroke out of said plurality of strokes:
i) sending said specific stroke to said renderer;
ii) rendering said specific stroke in said renderer, thus obtaining a specific rendered stroke corresponding to said specific stroke;
- appending said specific rendered strokes corresponding to said plurality of strokes, thus obtaining an output result.

2. The method according to claim 1 further comprising the step of:
- sending said output result to an imaging device.

3. A data processing system comprising means for carrying out the steps of the method according to claim 1 or claim 2.

4. A computer program comprising computer program code means adapted to perform the steps of the method of claim 1 or claim 2 when said program is run on a computer.

5. A computer readable medium comprising program code adapted to carry out the method of claim 1 or claim 2 when run on a computer.
